# EUROPÄISCHE PATENTSCHRIFT

(11) **EP 3 159 200 B1**
(45) Veröffentlichungstag und Bekanntmachung des Hinweises auf die Patenterteilung: **30.03.2022**
(21) Anmeldenummer: 16191402.3
(22) Anmeldetag: 29.09.2016
(51) Int. Cl.: B60K 6/442, B60K 6/387, B60K 6/36, B60K 6/547

(54) **GETRIEBEANORDNUNG FÜR EIN KRAFTFAHRZEUG**
TRANSMISSION ARRANGEMENT FOR A MOTOR VEHICLE
AGENCEMENT DE TRANSMISSION D'UN VÉHICULE AUTOMOBILE

(30) Priorität: 19.10.2015 DE 102015013528
(43) Veröffentlichungstag der Anmeldung: 26.04.2017
(73) Patentinhaber: AUDI AG, 85045 Ingolstadt (DE)
(72) Erfinder: Vollmer, Frank, 85049 Ingolstadt (DE); Burger, Jan-Stefan, 38100 Braunschweig (DE)

(56) Entgegenhaltungen:
- EP-A1- 2 444 266
- CN-A- 103 072 474
- CN-U- 203 157 692
- DE-A1-102006 036 758
- DE-A1-102011 005 451
- DE-A1-102011 102 267

## Beschreibung

Die Erfindung betrifft eine Getriebeanordnung.

Ein Kraftfahrzeug mit einem Hybridantrieb weist zu dessen Antrieb bzw. zu dessen Fortbewegung mehrere Maschinen, die üblicherweise als Motoren betrieben werden, bspw. eine Verbrennungskraftmaschine und eine Elektromaschine, auf. Um mechanische Energie, die aus den Maschinen gewandelt und bereitgestellt wird, auf ein Fahrwerk des Kraftfahrzeugs zu übertragen, ist eine Getriebeanordnung vorgesehen, über die die Maschinen mit dem Fahrwerk zu verbinden sind.

Eine Antriebsanordnung für einen Hybridantrieb eines Kraftfahrzeugs ist aus der Druckschrift DE 10 2011 116 935 A1 bekannt. Dabei umfasst die Antriebsanordnung eine Brennkraftmaschine und eine erste Elektromaschine, die mit einer ersten gemeinsamen Eingangswelle permanent verbunden sind. Weiterhin umfasst diese Antriebsanordnung eine zweite Elektromaschine mit einer zweiten Eingangswelle sowie eine Abtriebswelle. Hierbei ist vorgesehen, dass die erste Eingangswelle über eine erste Übersetzungsstufe oder eine zweite Übersetzungsstufe mit der Abtriebswelle und die zweite Eingangswelle über eine dritte Übersetzungsstufe oder eine vierte Übersetzungsstufe mit der Abtriebswelle zu verbinden ist.

Weiterhin ist aus der Druckschrift DE 10 2007 056 722 A1 ein Kraftübertragungsstrangsystem für ein Fahrzeug bekannt. Ein Lastschaltgetriebe für ein Kraftfahrzeug mit einem oder zwei Elektromotoren ist in der Druckschrift DE 10 2008 031 456 A1 beschrieben.

Ein aus der Druckschrift DE 10 2011 005 451 A1 bekannter Hybridantrieb für ein Fahrzeug umfasst einen Verbrennungsmotor VM und zwei Elektromaschinen EM1, EM2, die über Eingangswellen GE1, GE2 mit Schaltpaketen S1, S2, S3 verbindbar sind. Dabei umfassen die drei Schaltpakete S1, S2, S3 Gangkupplungen A, B, C, D, E, F für insgesamt drei Gänge.

Vor diesem Hintergrund wird eine Getriebeanordnung den Merkmalen von Patentanspruch 1 vorgestellt. Ausgestaltungen der Getriebeanordnung gehen aus den abhängigen Patentansprüchen sowie der Beschreibung hervor.

Die erfindungsgemäße Getriebeanordnung für ein Kraftfahrzeug, das zu seiner Fortbewegung bzw. zu seinem Antrieb eine erste Elektromaschine mit einer ersten Eingangswelle mit einem daran angeordneten Zahnrad, eine zweite Elektromaschine mit einer zweiten Eingangswelle sowie eine Verbrennungskraftmaschine mit einer dritten Eingangswelle aufweist, umfasst zwei Kupplungen, eine Schaltungseinheit und eine Ausgangswelle. Dabei weist die Schaltungseinheit lediglich zwei Gänge auf. Die Schaltungseinheit weist zwei Zahnräder auf. Außerdem weist die Ausgangswelle zwei Zahnräder auf. Dabei sind die zweite Eingangswelle der zweiten Elektromaschine und die dritte Eingangswelle der Verbrennungskraftmaschine zueinander koaxial angeordnet, wobei die dritte Eingangswelle über eine erste Kupplung mit der zweiten Eingangswelle drehfest und wieder lösbar zu verbinden ist. Die erste Eingangswelle der ersten Elektromaschine ist parallel zu den beiden anderen Eingangswellen, d. h. der zweiten Eingangswelle der zweiten Elektromaschine und der dritten Eingangswelle der Verbrennungskraftmaschine, parallel versetzt angeordnet, wobei die zweite Kupplung über die Schaltungseinheit mit der Ausgangswelle zu verbinden und als Doppelkupplung mit zwei Teilkupplungen ausgebildet ist.

Die Ausgangswelle ist parallel zu sämtlichen Eingangswellen angeordnet. Die Schaltungseinheit weist ein erstes formschlüssiges Schaltelement, ein zweites formschlüssiges Schaltelement, eine erste Eingangswelle und eine zweite Eingangswelle sowie weiterhin ein erstes Zahnrad, ein zweites Zahnrad und dazwischen ein drittes Zahnrad auf, wobei das erste Schaltelement zwischen dem ersten und dem dritten Zahnrad und das zweite Schaltelement zwischen dem zweiten Zahnrad und dem dritten Zahnrad angeordnet sind, wobei beide Eingangswellen der Schaltungseinheit koaxial und versetzt zu der zweiten Eingangswelle und somit auch zu der dritten Eingangswelle angeordnet und über die zweite Kupplung mit der zweiten Eingangswelle der zweiten Elektromaschine drehfest und somit mechanisch zu verbinden sind, wobei die erste Eingangswelle der ersten Elektromaschine parallel zu den beiden anderen Eingangswellen parallel versetzt angeordnet ist, wobei die erste Eingangswelle der ersten Elektromaschine über die Schaltungseinheit wahlweise in einem ersten Gang oder in einem zweiten Gang und somit lediglich in zwei möglichen Gängen der Schaltungseinheit unter Bereitstellung von zwei Übersetzungsverhältnissen zwischen der ersten Eingangswelle und der Ausgangswelle mit der Ausgangswelle verbindbar ist.

Die zweite Eingangswelle der zweiten Elektromaschine und, je nach Stellung und/oder Zustand der ersten Kupplung, auch die dritte Eingangswelle ist bzw. sind über die zweite Kupplung wahlweise jeweils in einem der beiden Gänge der Schaltungseinheit unter Bereitstellung eines jeweiligen Übersetzungsverhältnisses zwischen der zweiten Eingangswelle und der Ausgangswelle mit der Ausgangswelle verbindbar. Weiterhin ist die Ausgangswelle mit mindestens einer der beiden Elektromaschinen zu verbinden. Dabei ist die erste Eingangswelle in dem ersten Gang über das über das daran angeordnete Zahnrad der Schaltungseinheit mit dem ersten Zahnrad der Ausgangswelle zu verbinden, wobei die erste Eingangswelle alternativ über das daran angeordnete Zahnrad und über das zweite Zahnrad der Schaltungseinheit in dem zweiten Gang mit dem zweiten Zahnrad der Ausgangswelle zu verbinden ist, wobei die erste Eingangswelle durch Einstellen der Schaltungseinheit von der Ausgangswelle auch vollständig zu entkoppeln ist, wobei das Zahnrad an der ersten Eingangswelle mit dem dritten Zahnrad der Schaltungseinheit zu verbinden ist, wobei die zweite Eingangswelle über die als Doppelkupplung ausgebildete zweite Kupplung wahlweise mit der ersten Teilkupplung für den ersten Gang in dem ersten Gang oder mit der zweiten Teilkupplung für den zweiten Gang in dem zweiten Gang mit der Ausgangswelle verbindbar ist.

Somit kann die Ausgangswelle mit einer Elektromaschine, mit beiden Elektromaschinen oder mit keiner Elektromaschine verbunden werden.

Gemäß der Erfindung sind bei der Getriebeanordnung für die erste Elektromaschine lediglich zwei Gänge und somit zwei Übersetzungsverhältnisse vorgesehen, wobei die erste Eingangswelle und somit die erste Elektromaschine in dem ersten Gang oder dem zweiten Gang mit der Ausgangswelle zum Übertragen eines Drehmoments zwischen der ersten Eingangswelle und der Ausgangswelle zu verbinden und/oder zu kuppeln bzw. zu koppeln ist. Weiterhin sind die erste Eingangswelle und die Ausgangswelle voneinander zu trennen und somit zu entkuppeln bzw. zu entkoppeln.

Für die zweite Elektromaschine und die Brennkraftmaschine sind in einer außerhalb des Rahmens der Erfindung liegenden Variante der Getriebeanordnung jeweils nur ein einziger Gang und somit nur ein Übersetzungsverhältnis vorgesehen. In der Getriebeanordnung gemäß der Erfindung sind für die zweite Elektromaschine und die Brennkraftmaschine zwei Gänge und somit zwei Übersetzungsverhältnisse vorgesehen.

Bei beiden Varianten ist die zweite Eingangswelle und somit die zweite Elektromaschine in einem Gang der beiden möglichen Gänge mit der Ausgangswelle zum Übertragen eines Drehmoments zwischen der zweiten Eingangswelle und der Ausgangswelle zu verbinden und/oder zu kuppeln bzw. zu koppeln. Ergänzend ist bei beiden Varianten die dritte Eingangswelle und somit die Brennkraftmaschine in dem jeweiligen Gang mit der Ausgangswelle zum Übertragen eines Drehmoments zwischen der dritten Eingangswelle und der Ausgangswelle zu verbinden und/oder zu kuppeln bzw. zu koppeln. Weiterhin sind bei beiden Varianten die zweite Eingangswelle sowie die dritte Eingangswelle von der Ausgangswelle zu trennen und somit zu entkuppeln bzw. zu entkoppeln.

Außerdem ist die zweite Eingangswelle und somit üblicherweise auch die zweite Elektromaschine zwischen den beiden Kupplungen angeordnet. Die Verbrennungskraftmaschine ist bei geschlossener erster Kupplung sowie bei geschlossener zweiter Kupplung in demselben Gang wie die zweite Elektromaschine mit der Ausgangswelle zu verbinden. Dabei sind die zweite und dritte Eingangswelle mit der ersten Kupplung kraft- und/oder formschlüssig zu verbinden.

In Ausgestaltung ist die zweite Kupplung indirekt, bspw. über eine Übersetzung, mit der Ausgangswelle zu verbinden. Ergänzend ist die zweite Kupplung über die Schaltungseinheit indirekt mit der Ausgangswelle zu verbinden.

Die zweite Kupplung, über die zumindest die zweite Eingangswelle und somit die zweite Elektromaschine und ggf. auch die dritte Eingangswelle und somit die Verbrennungskraftmaschine mit der Ausgangswelle form- und/oder kraftschlüssig zu verbinden ist, ist als Doppelkupplung ausgebildet, die eine erste Teilkupplung für einen ersten Gang und eine zweite Teilkupplung für einen zweiten Gang umfasst.

Die Ausgangswelle der Getriebeordnung ist mit einem Fahrwerk und somit mit mindestens einem zum Fortbewegen bzw. Antreiben ausgebildeten Rad des Kraftfahrzeugs zu verbinden. Dabei ist mindestens eine der beiden Elektromaschinen als Elektromotor zu betreiben, mit dem elektrische Energie in mechanische Energie, üblicherweise in Rotationsenergie gewandelt wird.

Die zweite und dritte Eingangswelle weisen eine gemeinsame Achse auf, wobei die zweite und dritte Eingangswelle axial hintereinander angeordnet und über die erste Kupplung miteinander lösbar zu verbinden sind. Falls die erste Kupplung geschlossen ist, sind die zweite und die dritte Eingangswelle über die erste Kupplung miteinander mechanisch gekoppelt und somit drehfest verbunden. Falls die erste Kupplung dagegen geöffnet ist, sind die zweite und die dritte Eingangswelle voneinander mechanisch entkoppelt bzw. getrennt.

In einer außerhalb der Erfindung liegenden Ausgestaltung ist die zweite Eingangswelle der zweiten Elektromaschine und, je nach Stellung und/oder Zustand der ersten Kupplung, auch die dritte Eingangswelle über die zweite Kupplung in lediglich einem der beiden Gänge mit der Ausgangswelle verbindbar. Falls für die zweite und dritte Eingangswelle nur ein Gang vorgesehen ist, entspricht dessen Übersetzung üblicherweise der des ersten Gangs oder der des zweiten Gangs, der für die erste Elektromaschine vorgesehen ist.

Erfindungsgemäß ist die zweite Eingangswelle der zweiten Elektromaschine und, je nach Stellung und/oder Zustand der ersten Kupplung, auch die dritte Eingangswelle über die zweite Kupplung in dem ersten Gang oder in dem zweiten Gang mit der Ausgangswelle verbindbar.

Ein nicht beanspruchtes Verfahren ist zum Betreiben eines Kraftfahrzeugs vorgesehen, das zu seiner Fortbewegung eine erste Elektromaschine, der eine ersten Eingangswelle zugeordnet ist, eine zweite Elektromaschine, der eine zweite Eingangswelle zugeordnet ist, sowie eine Verbrennungskraftmaschine, der eine dritte Eingangswelle zugeordnet ist, aufweist. Die Getriebeanordnung des Kraftfahrzeugs weist zwei Kupplungen, eine Schaltungseinheit und eine Ausgangswelle auf. Dabei sind die zweite Eingangswelle für die zweite Elektromaschine und die dritte Eingangswelle für die Verbrennungskraftmaschine zueinander koaxial angeordnet. Die dritte Eingangswelle wird über eine erste Kupplung mit der zweiten Eingangswelle lösbar verbunden. Die erste Eingangswelle für die erste Elektromaschine ist parallel zu den beiden anderen Eingangswellen, d. h. der zweiten Eingangswelle der zweiten Elektromaschine und der dritten Eingangswelle der Verbrennungskraftmaschine, angeordnet. Die Ausgangswelle ist parallel zu den Eingangswellen angeordnet.

Bei Durchführung des Verfahrens wird die erste Eingangswelle für die erste Elektromaschine über die Schaltungseinheit wahlweise in einem ersten Gang bzw. in einer ersten Übersetzungsstufe oder in einem zweiten Gang bzw. in einer zweiten Übersetzungsstufe unter Bereitstellung eines ersten oder zweiten Übersetzungsverhältnisses mit der Ausgangswelle verbunden. Die zweite Eingangswelle für die zweite Elektromaschine und, je nach Stellung und/oder Zustand der ersten Kupplung, auch die dritte Eingangswelle wird bzw. werden über die zweite Kupplung wahlweise jeweils in einem der beiden Gänge, d. h. alternativ im ersten oder zweiten Gang oder lediglich in einem möglichen Gang, bzw. in einer der beiden Übersetzungsstufen unter Bereitstellung eines Übersetzungsverhältnisses mit der Ausgangswelle verbunden, wobei die Ausgangswelle mit mindestens einer der beiden Elektromaschinen drehfest und wieder lösbar verbunden wird.

Dabei wird die erste Eingangswelle entweder in dem ersten Gang oder in dem zweiten Gang mit der Ausgangswelle zum Übertragen eines Drehmoments zwischen der ersten Eingangswelle und der Ausgangswelle verbunden. Es ist auch möglich, dass die erste Eingangswelle von der Ausgangswelle getrennt wird.

Die zweite und die dritte Eingangswelle werden in einer ersten Variante des Verfahrens jeweils nur in einem Gang und somit nur unter einem Übersetzungsverhältnis mit der Ausgangswelle verbunden. In einer zweiten Variante des Verfahrens können die zweite und dritte Eingangswelle mit genau und/oder maximal zwei Gängen und somit unter zwei Übersetzungsverhältnissen mit der Ausgangswelle verbunden werden.

In Ausgestaltung wird die erste Elektromaschine mit der Ausgangswelle verbunden oder von dieser entkoppelt. Alternativ oder ergänzend wird die zweite Elektromaschine mit der Ausgangswelle verbunden oder von dieser entkoppelt. So ist es möglich, dass lediglich eine der beiden Elektromaschinen, d. h. die erste Elektromaschine oder die zweite Elektromaschine, mit der Ausgangswelle verbunden wird. Alternativ werden beide Elektromaschinen mit der Ausgangswelle verbunden.

Je nach Stellung der ersten Kupplung wird die Verbrennungskraftmaschine zusätzlich zu der zweiten Elektromaschine über die zweite Elektromaschine und mindestens eine Kupplung indirekt mit der Ausgangswelle verbunden.

Mit der vorgestellten Getriebeanordnung wird eine reduzierte Anzahl an Gängen, d. h. zwei Gänge für die erste Elektromaschine, sowie ein Gang, maximal zwei Gänge, für die zweite Elektromaschine und die Verbrennungskraftmaschine bereitgestellt. Dabei weist diese Getriebeanordnung gegenüber herkömmlichen Getriebeanordnungen eine geringere Anzahl an Komponenten, bspw. eine geringe Anzahl an Schaltelementen und/oder Zahnrädern als Komponenten der Schaltungseinheit auf, wobei eine zugehörige Ansteuerung der Getriebeanordnung entsprechend einfach ausgestaltet werden kann.

Ein Anfahren des Kraftfahrzeugs wird ausgehend von der ersten Elektromaschine und/oder der zweiten Elektromaschine üblicherweise elektrisch durchgeführt. Mit der Getriebeanordnung sind unterschiedliche gangabhängige Verschaltungen zwischen den Eingangswellen und der Ausgangswelle einstellbar und somit unterschiedliche Betriebszustände realisierbar.

So ist es möglich, lediglich die erste Elektromaschine oder die zweite Elektromaschine und die Verbrennungskraftmaschine in dem ersten Gang mit der Ausgangswelle zu verbinden, wobei die erste Elektromaschine in dem ersten Gang oder in dem zweiten Gang mit der Ausgangswelle verbunden ist oder von der Ausgangswelle abgekoppelt wird. Außerdem ist es möglich, lediglich die erste Elektromaschine oder die zweite Elektromaschine und die Verbrennungskraftmaschine über den zweiten Gang mit der Ausgangswelle zu verbinden, wobei die erste Elektromaschine in diesem Fall entweder über den ersten Gang oder den zweiten Gang mit der Ausgangswelle verbunden wird oder von der Ausgangswelle abgekoppelt wird. Somit ist es unter anderem möglich, die Verbrennungskraftmaschine von der Ausgangswelle abzukoppeln und bei einer Fahrt des Kraftfahrzeugs die erste Elektromaschine über den ersten Gang oder den zweiten Gang mit der Ausgangswelle zu verbinden. Alternativ oder ergänzend wird die zweite Elektromaschine über lediglich einen Gang, d. h. den ersten oder den zweiten Gang mit der Ausgangswelle verbunden.

Über die in Ausgestaltung als Doppelkupplung ausgebildete zweite Kupplung, die direkt mit der Ausgangswelle formschlüssig zu verbinden ist, oder die mit dem mindestens einen Schaltelement und/oder Zahnrad der Schaltungseinheit formschlüssig sowie indirekt mit der Ausgangswelle zu verbinden ist, wird eine Lastschaltbarkeit für die zweite Elektromaschine und/oder die Verbrennungskraftmaschine bereitgestellt.

Die vorgestellte Getriebeanordnung ist reduziert und kompakt aufgebaut und benötigt nur einen geringen Bauraum. Dennoch ist ausgehend von mindestens einer der Elektromaschinen eine hohe elektrische Leistung auf die Ausgangswelle zu übertragen.

Falls in einer außerhalb des Rahmens der Erfindung liegenden der Getriebeanordnung für die

Verbrennungskraftmaschine und die zweite Elektromaschine lediglich ein frei wählbarer Gang vorgesehen ist, sind mit der Getriebeanordnung unterschiedliche Stellungen bzw. Vorschaltungen oder Betriebszustände einstellbar. So ist es möglich, dass die zweite Elektromaschine und, je nach Stellung der ersten Kupplung, auch die Verbrennungskraftmaschine in dem einen Gang mit der Ausgangswelle verbunden wird, wobei die erste Elektromaschine entweder in dem ersten Gang oder in dem zweiten Gang mit der Ausgangswelle verbunden oder von der Ausgangswelle abgekoppelt wird. Falls sowohl die zweite Elektromaschine als auch die Verbrennungskraftmaschine von der Ausgangswelle abgekoppelt werden, wird bei einer Fahrt des Kraftfahrzeugs die erste Elektromaschine entweder in dem ersten Gang oder dem zweiten Gang mit der Ausgangswelle unter Bereitstellung des ersten oder zweiten Übersetzungsverhältnisses zwischen der ersten Eingangswelle und der Ausgangswelle verbunden. In Ausgestaltung wird zum Antreiben die erste Elektromaschine verwendet. Dabei kann bei einer Schaltung der ersten Elektromaschine ein Einbruch einer Zugkraft für das Kraftfahrzeug durch Betrieb der zweiten Elektromaschine kompensiert werden.

Außerdem ist vorgesehen, dass aufgrund einer hohen elektrischen Leistung mindestens einer der beiden Elektromaschinen die Getriebeanordnung hinsichtlich ihrer Größe reduziert ausgebildet werden kann, wobei über die Getriebeanordnung mindestens eine der beiden Elektromaschinen und ggf. auch die Verbrennungskraftmaschine über die Ausgangswelle mit dem Fahrwerk des Kraftfahrzeugs und somit mit mindestens einem zum Antrieben bzw. Fortbewegen des Kraftfahrzeugs ausgebildeten Rad verbunden wird. Bei einer möglichen Umsetzung des Verfahrens ist ein bedarfsgerechter, effizienter Betrieb des Kraftfahrzeugs ausgehend von mindestens einer der Elektromaschinen und ggf. der Verbrennungskraftmaschine möglich, wobei mindestens eine Elektromaschine zum Fortbewegen des Kraftfahrzeugs verwendet wird. Ergänzend wird ggf. zusätzlich auch die Verbrennungskraftmaschine zum Fortbewegen des Kraftfahrzeugs verwendet. Somit ist es möglich, die mindestens eine Elektromaschine mit der Ausgangswelle zu koppeln und eine der Elektromaschinen bei einem Nichtbetrieb von der Ausgangswelle zu entkoppeln. Sofern die zweite Elektromaschine mit der Ausgangswelle verbunden ist, ist optional möglich, auch die Verbrennungskraftmaschine mit der Ausgangswelle zu verbinden. Zum Antreiben des Kraftfahrzeugs ist in Ausgestaltung lediglich die erste Elektromaschine oder lediglich die zweite Elektromaschine zu verwenden. Weiterhin ist möglich, beide Elektromaschinen zum Fortbewegen des Kraftfahrzeugs zu verwenden. Außerdem ist möglich, die zweite Elektromaschine und die Verbrennungskraftmaschine zum Antreiben des Kraftfahrzeugs mit der Ausgangswelle zu verbinden. Außerdem ist möglich, beide Elektromaschinen sowie die Verbrennungskraftmaschine üblicherweise gleichzeitig mit der Ausgangswelle zu verbinden. Hierbei sind über die Getriebeanordnung unterschiedliche Leistungspfade bzw. Übersetzungsstufen bereitstellbar. Insgesamt wird mit der Getriebeanordnung eine ansonsten übliche Anzahl an Gängen reduziert. Eine der beiden Elektromaschinen kann je nach Betriebssituation als Generator betrieben werden, während die andere Elektromaschine als Motor betrieben wird. Bei einem Betrieb als Generator wird eine Elektromaschine von der Verbrennungskraftmaschine angetrieben, wobei mechanische Energie der Verbrennungskraftmaschine von der Elektromaschine in elektrische Energie umzuwandeln ist. Die so erzeugte elektrische Energie kann zum Betrieb der anderen Elektromaschine verwendet werden. Somit ist ein serieller Betrieb des Kraftfahrzeugs möglich. Alternativ kann die elektrische Energie auch in einer Batterie gespeichert werden.

Die beiden Schaltelemente und die Zahnräder der Schaltungseinheit sind dazu ausgebildet, entweder die erste Eingangswelle oder die erste oder die zweite Eingangswelle mit der Ausgangswelle kraft- und/oder formschlüssig zu verbinden, wobei eine Anzahl an Zahneingriffen durch Zahnräder und eine Anzahl an Schaltelementen reduziert werden kann. Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine Ausführungsform der erfindungsgemäßen Getriebeanordnung.
Figur 2 zeigt in schematischer Darstellung eine weitere , außerhalb des Rahmens der Erfindung liegende

Getriebeanordnung.

Figur 3 zeigt in schematischer eine aus dem Stand der Technik bekannte Getriebeanordnung.

Die Figuren werden zusammenhängend und übergreifend beschrieben, gleichen Komponenten sind dieselben Bezugsziffern zugeordnet.

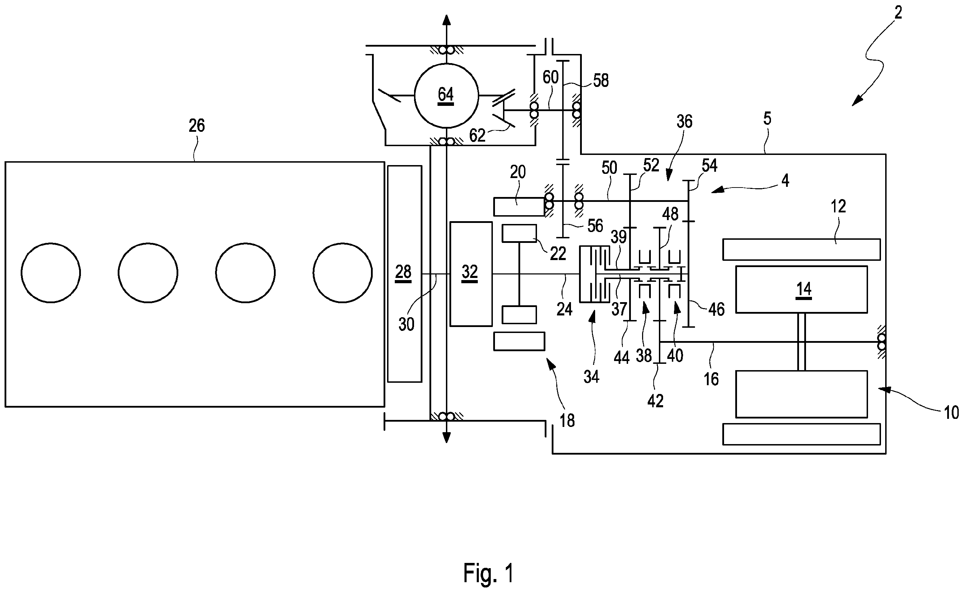

Figur 1 zeigt in schematischer Darstellung ein erfindungsgemäßes Beispiel für ein

Antriebsaggregat 2 für ein Kraftfahrzeug, das die Ausführungsform der erfindungsgemäßen Getriebeanordnung 4 umfasst.

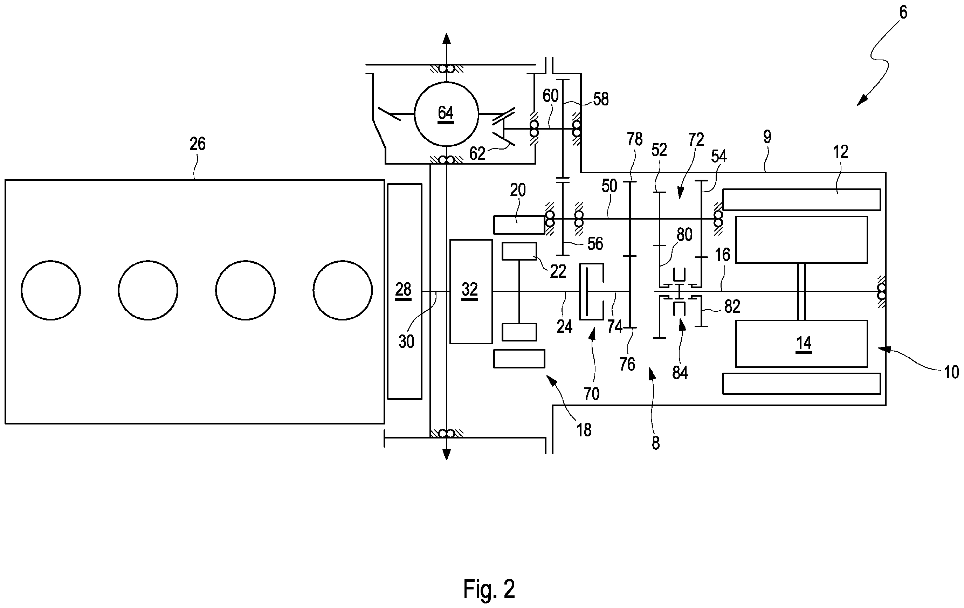

Das in Figur 2 schematisch dargestellte nicht erfindungsgemäße Beispiel für ein

Antriebsaggregat 6 für ein Kraftfahrzeug umfasst eine weitere Getriebeanordnung 8.

Dabei umfassen beide hier vorgestellten Antriebsaggregate 2, 6 eine erste als Elektromaschine 10 ausgebildete Maschine mit einem Stator 12 und einem Rotor 14, der sich mit einer ersten Eingangswelle 16 relativ zu dem Stator 12 dreht. Dabei ist an der ersten Eingangswelle 16 außerhalb des Rotors 14 ein Zahnrad 42 angeordnet. Außerdem umfasst jedes Antriebsaggregat 2, 6 eine zweite als Elektromaschine 18 ausgebildete Maschine mit einem Stator 20 und einem Rotor 22, mit dem sich eine zweite Eingangswelle 24 relativ zu dem Stator 20 dreht. Als dritte Maschine umfasst jedes Antriebsaggregat 2, 6 eine Verbrennungskraftmaschine 26, der hier ein Zweimassenschwungrad 28 zugeordnet ist. Außerdem weist die Verbrennungskraftmaschine 26 eine dritte Eingangswelle 30, die bei einem Betrieb der Verbrennungskraftmaschine 26 in Rotation versetzt wird, auf. Hierbei ist jeweils vorgesehen, dass die zweite Eingangswelle 24 der zweiten Elektromaschine 18 koaxial zu der dritten Eingangswelle 30 der Verbrennungskraftmaschine 26 angeordnet ist, wobei beide genannten Eingangswellen 24, 30 über eine erste Kupplung 32 miteinander zu verbinden sind, wobei die Eingangswellen 24, 30 und die erste Kupplung 32 koaxial hintereinander angeordnet sind. Falls diese erste Kupplung 32 geöffnet ist, können sich die zweite Eingangswelle 24 und die dritte Eingangswelle 30 unabhängig voneinander drehen. Falls die erste Kupplung 32 jedoch geschlossen ist, sind die erste Eingangswelle 24 und die zweite Eingangswelle 30 miteinander mechanisch verbunden, wobei sich die beiden Eingangswellen 24, 30 miteinander synchron drehen können.

Außerdem weist jede Getriebeanordnung 4, 8 eine Ausgangswelle 50 mit einem Zahnrad 56 auf, das auch als Ausgangs-Zahnrad bezeichnet wird. Dabei steht das an der Ausgangswelle 50 angeordnete Zahnrad 56 in rotatorischer Verbindung mit einem Zahnrad 58 einer Abtriebswelle 60, die wiederum über ein Tellerrad 62 mit einem Differenzial 64 zu verbinden ist. Dabei ist die Getriebeanordnung 4, 8 über das Differenzial 64 mit den Rädern eines Fahrwerks zum Antreiben bzw. Fortbewegen des Kraftfahrzeugs zu verbinden. Die Getriebeanordnung 4, 8 sowie die beiden Elektromaschinen 10, 18 sind hier in einem Gehäuse 5, 9 angeordnet.

Bei der Ausführungsform der Getriebeanordnung 4 aus Figur 1 ist die erste Eingangswelle 16 der ersten Elektromaschine 10 zu der zweiten Eingangswelle 24 und der dritten Eingangswelle 30 parallel jedoch zu diesen beiden Eingangswellen 24, 30 räumlich versetzt angeordnet.

Als weitere Komponenten der Ausführungsform der Getriebeanordnung 4 sind hier eine zweite Kupplung 34, die hier als Doppelkupplung (K1/K2) mit zwei Teilkupplungen ausgebildet ist, und ein erstes Beispiel für eine Schaltungseinheit 36 vorgesehen. Dabei umfasst diese Schaltungseinheit 36 ein erstes formschlüssiges Schaltelement 38 und ein zweites formschlüssiges Schaltelement 40 sowie weiterhin ein erstes Zahnrad 44, ein zweites Zahnrad 46 und dazwischen ein drittes Zahnrad 48, wobei die erste Schaltungseinheit 38 zwischen dem ersten und dem dritten Zahnrad 44, 48 und die zweite Schaltungseinheit 40 zwischen dem zweiten Zahnrad 46 und dem dritten Zahnrad 48 angeordnet sind. Ferner umfasst die Ausgangswelle 50 der ersten Getriebeanordnung 4 ein erstes Zahnrad 52 und ein zweites Zahnrad 54, wobei beide Zahnräder 52, 54 als Eingangs-Zahnräder bezeichnet werden können. Bei einem Betrieb der ersten Elektromaschine 10 ist hier vorgesehen, die erste Eingangswelle 16 über das daran angeordnete Zahnrad 42 in einem ersten Gang und somit in bzw. unter einer ersten Übersetzungsstufe über das erste Zahnrad 44 der Schaltungseinheit 36 mit dem ersten Zahnrad 52 der Ausgangswelle 50 zu verbinden. Alternativ ist möglich, die erste Eingangswelle 16 über das daran angeordnete Zahnrad 42 und das zweite Zahnrad 46 der Schaltungseinheit 36 unter Bereitstellung eines zweiten Gangs und somit in bzw. unter einer zweiten Übersetzungsstufe mit dem zweiten Zahnrad 54 der Ausgangswelle 50 zu verbinden.

Bei einem Betrieb der Ausführungsform der Getriebeanordnung 4 wird die erste Eingangswelle 16 über das erste Zahnrad 44 der Schaltungseinheit 36 mit dem ersten Zahnrad 52 der Ausgangswelle 50 unter Bereitstellung des ersten Gangs mit dem ersten Übersetzungsverhältnis verbunden. Alternativ wird das Zahnrad 42 der ersten Eingangswelle unter Bereitstellung des zweiten Gangs über das zweite Zahnrad 46 der Schaltungseinheit 36 mit dem zweiten Zahnrad 54 der Ausgangswelle 50 verbunden. Es ist jedoch auch möglich, die Eingangswelle 16 durch Einstellen der Schaltungseinheit 36 von der Ausgangswelle 50 vollständig zu entkoppeln. Dabei ist, wie explizit in Figur 1 dargestellt, das Zahnrad 42 an der ersten Eingangswelle 16 mit dem dritten Zahnrad 48 der Schaltungseinheit 36 zu verbinden. Mit dem Zahnrad 42 der ersten Eingangswelle 16 ist eine Übersetzung i_{EM1} bereitzustellen. Dagegen ist mit dem ersten Zahnrad 52 der Ausgangswelle 50 eine erste Übersetzung i₁ und mit dem zweiten Zahnrad 54 der Ausgangswelle 50 eine zweite Übersetzung i₂ bereitzustellen.

Außerdem umfasst die Schaltungseinheit 36 eine erste Eingangswelle 37 und eine zweite Eingangswelle 39. Dabei ist die zweite Eingangswelle 39 als Hohlwelle ausgebildet, die die erste Eingangswelle 37 koaxial umschließt. Beide Eingangswellen 37, 39 der Schaltungseinheit 36 sind koaxial und versetzt zu der zweiten Eingangswelle 24 und somit auch zu der dritten Eingangswelle 30 angeordnet und über die zweite Kupplung 34 mit der zweiten Eingangswelle 24 der zweiten Elektromaschine 18 drehfest und somit mechanisch zu verbinden. Bei der als Doppelkupplung ausgebildeten zweiten Kupplung 34, die zwei Teilkupplungen umfasst, ist vorgesehen, dass eine der beiden Teilkupplungen geschlossen und die andere Teilkupplung geöffnet ist. Außerdem ist für den Fall, dass die erste Kupplung 32 und eine der beiden Teilkupplungen der zweiten Kupplung 34 geschlossen ist, die Eingangswellen 37, 39 der Schaltungseinheit 36 auch drehfest mit der dritten Eingangswelle 30 der Verbrennungskraftmaschine 26 zu verbinden. Weiterhin ist bzw. sind die zweite Eingangswelle 24 und ggf. auch die dritte Eingangswelle 30 über die zweite Kupplung 34 und die Schaltungseinheit 36 mit der Ausgangswelle 50 zu verbinden.

Bei Durchführung des Verfahrens mit der Ausführungsform der Getriebeanordnung 4 wird die erste Eingangswelle 16 und somit die erste Elektromaschine 10 über die Schaltungseinheit 36 unter Bereitstellung des ersten Gangs oder unter Bereitstellung des zweiten Gangs mit der Ausganswelle 50 verbunden. Es ist jedoch auch möglich, die erste Eingangswelle 16 von der Ausgangswelle 50 vollständig zu entkoppeln. Außerdem wird die zweite Eingangswelle 24 und somit auch die zweite Elektromaschine 18 bei einer geschlossenen Teilkupplung der zweiten Kupplung 34 über die Schaltungseinheit 36 in einem Gang, hier in dem ersten oder dem zweiten Gang, mit der Ausgangswelle 50 verbunden. Falls zusätzlich die erste Kupplung 32 geschlossen ist, wird auch die zweite Eingangswelle 30 und somit die Verbrennungskraftmaschine 26 über die zweite Eingangswelle 24, die zweite Kupplung 34 bzw. Doppelkupplung und die Schaltungseinheit 36 in demselben ersten oder zweiten Gang wie die zweite Elektromaschine 18 mit der Ausgangswelle 50 verbunden.

Im Unterschied hierzu weist die weitere Getriebeanordnung 8 eine kraft- oder formschlüssige zweite Kupplung 70 (K1) sowie ein zweites Beispiel einer Schaltungseinheit 72 auf. Hierbei ist die zweite Eingangswelle 24 je nach Stellung der zweiten Kupplung 70 mit einer weiteren Eingangswelle 74 verbindbar, an der ein Zahnrad 76 angeordnet ist. Dieses Zahnrad 76 der weiteren Eingangswelle 74 steht mit einem zusätzlichen Zahnrad 78 der Ausgangswelle 50 in Verbindung. Die Schaltungseinheit 72 umfasst hierbei einen Abschnitt der ersten Eingangswelle 16 der ersten Elektromaschine 10, wobei in diesem genannten Bereich entlang der ersten Eingangswelle 16 ein erstes Zahnrad 80 sowie ein zweites Zahnrad 82 angeordnet sind, wobei das erste Zahnrad 80 eine erste Anzahl an Zähnen und einen ersten Durchmesser und das zweite Zahnrad 82 eine zweite Anzahl an Zähnen sowie einen zweiten Durchmesser aufweist.

Somit sind durch diese beiden unterschiedlich ausgebildeten Zahnräder 52, 54, 80, 82 der ersten Eingangswelle 16 sowie durch die Schaltungseinheit 72 unterschiedliche Übersetzungen i1', i2' bereitstellbar. Durch Zusammenwirken des Zahnrads 76 der weiteren Eingangswelle 74 und des Zahnrads 78 der Ausgangswelle 50 ist eine Übersetzung i3' bereitstellbar, wobei i3' gleich i1' oder gleich i2' ist. Außerdem umfasst die Schaltungseinheit 72 ein Schaltungselement 84, das zwischen den beiden Zahnrädern 80, 82 angeordnet ist. Dabei ist auch hier, wie im Fall der Ausführungsform der Getriebeanordnung 4 möglich, dass die Eingangswelle 16 über das erste Zahnrad 80 und das erste Zahnrad 52 unter Bereitstellung eines ersten Gangs zwischen der ersten Eingangswelle 16 und der Ausgangswelle 50 mit der Ausgangswelle 50 in Verbindung steht. Es ist möglich, dass die erste Eingangswelle 16 über das daran angeordnete zweite Zahnrad 82 sowie das zweite Zahnrad 54 der Ausgangswelle 50 unter Bereitstellung eines zweiten Gangs zwischen der ersten Eingangswelle 16 und der Ausgangswelle 50 mit der Ausgangswelle 50 in Verbindung steht. Ferner ist auch möglich, die erste Eingangswelle 16 über die Schaltungseinheit 72 von der Ausgangswelle 50 zu entkoppeln und somit zu lösen.

Bei Durchführung eines Verfahrens mit der Getriebeanordnung 8 wird die erste Eingangswelle 16 und somit die erste Elektromaschine 10 über die Schaltungseinheit 72 unter einem ersten Übersetzungsverhältnis in dem ersten Gang oder unter einem zweiten Übersetzungsverhältnis in dem zweiten Gang mit der Ausgangswelle 50 verbunden. Die zweite Eingangswelle 24 und somit die zweite Elektromaschine 18 wird über die zweite Kupplung 70 in jeweils einem Gang mit einem jeweiligen Übersetzungsverhältnis mit der Ausgangswelle 50 verbunden. Bei der beschriebenen weiteren Getriebeanordnung 8 sowie des Verfahrens wird dabei die zweite Eingangswelle 24 entweder in dem ersten Gang unter einem ersten Übersetzungsverhältnis oder in dem zweiten Gang unter einem zweiten Übersetzungsverhältnis mit der Ausgangswelle 50 verbunden. Sofern auch hier die erste Kupplung 32 geschlossen ist, wird auch die dritte Eingangswelle 30 und somit die Verbrennungskraftmaschine 26 über die zweite Eingangswelle 24 und über die zweite Kupplung 70 unter Bereitstellung des Gangs mit der Ausgangswelle 50 verbunden. In einer alternativen Ausgestaltung ist möglich, statt der zweiten Kupplung 70 eine Schaltungseinheit zu verwenden, die analog zu der Schaltungseinheit 72 ausgebildet ist. Somit ist möglich, die zweite Elektromaschine 18 und ggf. auch die Verbrennungskraftmaschine 26 unter Bereitstellung des ersten oder zweiten Gangs mit der Ausgangswelle 50 zu verbinden.

Falls bei einer jeweils vorgestellten Getriebeanordnung 4, 8 sowie des Verfahrens nur zwei Gänge vorgesehen sind, wobei für die erste Elektromaschine 10 (EM1) entweder der erste oder der zweite Gang und für die zweite Elektromaschine 18 (EM2) über die zweite Eingangswelle 24 ebenfalls der erste oder der zweite Gang und je nach Stellung der ersten Kupplung 32 auch für die Verbrennungskraftmaschine 26 (VKM) entweder der erste oder der zweite Gang bereitgestellt wird, sind mit der jeweiligen Getriebeanordnung 4, 8 unterschiedliche Betriebszustände realisierbar, die in nachfolgender Tabelle 1 aufgelistet sind:

**Tabelle 1**

| Betriebszustand | EM1 | EM2 | VKM |
|---|---|---|---|
| 1 | Gang 1 | x | x |
| 2 | Gang 2 | x | x |
| 3 | Gang 1 | Gang 1 | x |
| 4 | Gang 1 | Gang 2 | x |
| 5 | Gang 2 | Gang 1 | x |
| 6 | Gang 2 | Gang 2 | x |
| 7 | Gang 1 | Gang 1 | Gang 1 |
| 8 | Gang 1 | Gang 2 | Gang 2 |
| 9 | Gang 2 | Gang 1 | Gang 1 |
| 10 | Gang 2 | Gang 2 | Gang 2 |
| 11 | x | Gang 1 | x |
| 12 | x | Gang 2 | x |
| 13 | x | Gang 1 | Gang 1 |
| 14 | x | Gang 2 | Gang 2 |

Dabei sind in einer ersten Spalte in Tabelle 1 die möglichen Betriebszustände angegeben. In der zweiten Spalte, die der ersten Elektromaschine 10 (EM1) zugeordnet ist, ist in einer jeweiligen Zeile angegeben, ob die erste Eingangswelle 16 der ersten Elektromaschine 10 im ersten Gang (Gang 1) oder im zweiten Gang (Gang 2) mit der Ausgangswelle 50 verbunden oder von dieser entkoppelt ist (x). Entsprechend ist in der zweiten Spalte von Tabelle 1 für die zweite Elektromaschine 18 (EM2) jeweils angegeben, in welchem der beiden möglichen Gänge die zweite Eingangswelle 24 mit der Ausgangswelle 50 gekoppelt ist (Gang 1 oder Gang 2) oder ob die zweite Eingangswelle 2 von der Ausgangswelle 50 entkoppelt ist (x). In der vierten Spalte von Tabelle 1 für die Verbrennungskraftmaschine 26 (VKM) ist jeweils angegeben, ob die dritte Eingangswelle 30 der Verbrennungskraftmaschine 26 im ersten oder zweiten Gang (Gang 1 oder Gang 2) mit der Ausgangswelle 50 verbunden oder von dieser entkoppelt ist (x).

Es ist jedoch auch möglich, wie in nachfolgender Tabelle 2 angedeutet, lediglich die erste Elektromaschine 10 (EM1) über die erste Eingangswelle 16 entweder im ersten Gang (Gang 1) oder im zweiten Gang (Gang 2) mit der Ausgangswelle 50 zu verbinden. Im Unterschied zu der anhand von Tabelle 1 vorgestellten Variante wird hier die zweite Elektromaschine 18 (EM2) mit der zweiten Eingangswelle 24 nicht wahlweise in einem ersten oder zweiten Gang, sondern lediglich in einem möglichen Gang (Gang 1 bzw. 2) mit der Ausgangswelle 50 verbunden. Somit wird auch die Verbrennungskraftmaschine 26 für die dritte Eingangswelle 30 lediglich in einem Gang (Gang 1 bzw. 2) mit der Ausgangswelle 50 verbunden.

**Tabelle 2**

| Betriebszustand | EM1 | EM2 | VKM |
|---|---|---|---|
| 1 | Gang 1 | x | x |
| 2 | Gang 2 | x | x |
| 3 | Gang 1 | Gang 1 bzw. 2 | x |
| 4 | Gang 2 | Gang 1 bzw. 2 | x |
| 5 | Gang 1 | Gang 1 bzw. 2 | Gang 1 bzw. 2 |
| 6 | Gang 2 | Gang 1 bzw. 2 | Gang 1 bzw. 2 |
| 7 | x | Gang 1 bzw. 2 | x |
| 8 | x | Gang 1 bzw. 2 | Gang 1 bzw. 2 |

Bei beiden Getriebeanordnungen 4, 8 und somit bei dem Verfahren ist bei einer ersten Variante durch die erste Kupplung 32 zwischen der zweiten Eingangswelle 24 der zweiten Elektromaschine 18 sowie der dritten Eingangswelle 30 der Verbrennungskraftmaschine 26 eine Lastschaltbarkeit bereitzustellen. Die erste Elektromaschine 10 ist über die erste Eingangswelle 16 in einem der beiden möglichen Gänge mit der Ausgangswelle 50 zu koppeln oder von dieser abzukoppeln, was über eine als Vorgelegestufe ausgebildete Schaltungseinheit 36, 72 zu realisieren ist, wobei für die erste Elektromaschine 10 im Vergleich zu der zweiten Elektromaschine 18 und ggf. der Verbrennungskraftmaschine 26 eine andere Gesamtübersetzung realisierbar ist. In einer alternativ oder ergänzend realisierbaren zweiten Variante ist vorgesehen, dass die zweite Elektromaschine 18 und ggf. die Verbrennungskraftmaschine 26 lediglich über einen Gang unter Bereitstellung lediglich eines Übersetzungsverhältnisses über eine jeweilige Eingangswelle 24, 30 mit der Ausgangswelle 50 zu verbinden ist. Dagegen ist die erste Eingangswelle 16 und somit die erste Elektromaschine 10 unter Bereitstellung von zwei möglichen Gängen mit der Ausgangswelle 50 zu verbinden. Sofern Zahnräder 52, 54, 78 der Ausgangswelle 50 als Losräder ausgebildet sind, ist eine Effizienz der Getriebeanordnung 4, 8 zu erhöhen.

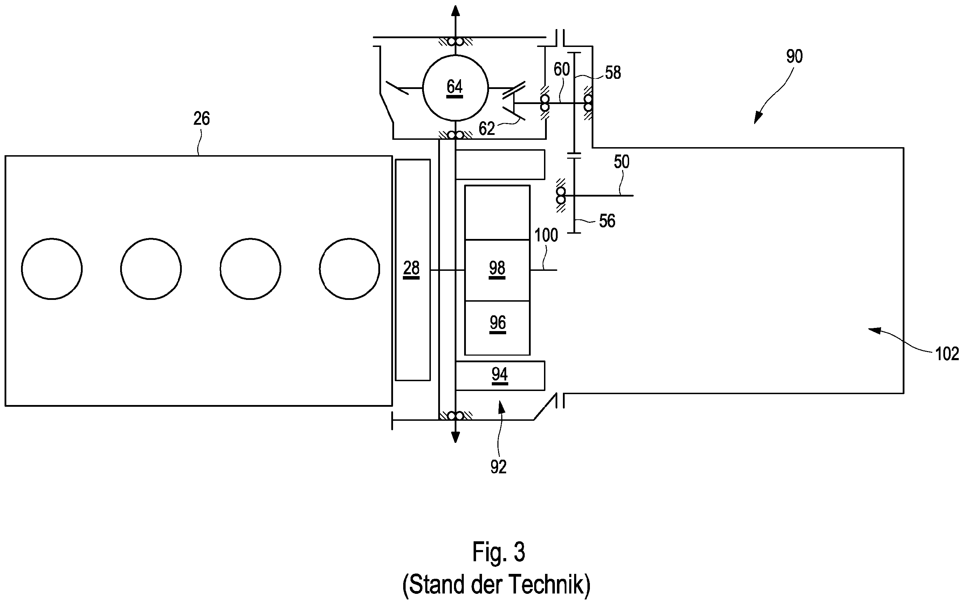

Zum Vergleich wird auf ein in Figur 3 schematisch dargestelltes Beispiel einer Getriebeanordnung 90 verwiesen, die lediglich eine Elektromaschine 92 mit einem Stator 94 und einem Rotor 96 aufweist. Dabei ist hierbei eine Kupplung 98 in die Elektromaschine 92 integriert. Die Elektromaschine 92 und, je nach Schaltung der Kupplung 98, ggf. die Brennkraftmaschine 26 ist, bzw. sind über eine Ausgangswelle 100 mit einem Automatikgetriebe 102 verbunden, das wiederum mit einer Ausgangswelle 50 verbunden ist.

## Patentansprüche

1. Getriebeanordnung für ein Kraftfahrzeug, das zu seiner Fortbewegung eine erste Elektromaschine (10) mit einer ersten Eingangswelle (16) mit einem daran angeordneten Zahnrad (42), eine zweite Elektromaschine (18) mit einer zweiten Eingangswelle (24) sowie eine Verbrennungskraftmaschine (26) mit einer dritten Eingangswelle (30) aufweist, wobei die Getriebeanordnung (4) zwei Kupplungen (32, 34) aufweist, wobei die Getriebeanordnung (4) eine Schaltungseinheit (36) mit lediglich zwei Gängen und eine Ausgangswelle (50) aufweist, wobei die Ausgangswelle (50) zwei Zahnräder (52, 54) aufweist, wobei die zweite Eingangswelle (24) der zweiten Elektromaschine (18) und die dritte Eingangswelle (30) der Verbrennungskraftmaschine (26) zueinander koaxial angeordnet sind, wobei die dritte Eingangswelle (30) über eine erste Kupplung (32) mit der zweiten Eingangswelle (24) zu verbinden ist, wobei die Ausgangswelle (50) parallel zu den Eingangswellen (16, 24, 30) angeordnet ist, wobei die zweite Kupplung (34) über die Schaltungseinheit (36) mit der Ausgangswelle (50) zu verbinden und als Doppelkupplung mit zwei Teilkupplungen ausgebildet ist, **dadurch gekennzeichnet,**
**dass** die Schaltungseinheit (36) ein erstes formschlüssiges Schaltelement (38) und ein zweites formschlüssiges Schaltelement (40), eine erste Eingangswelle (37) und eine zweite Eingangswelle (39) sowie weiterhin ein erstes Zahnrad (44), ein zweites Zahnrad (46) und dazwischen ein drittes Zahnrad (48) aufweist, wobei das erste Schaltelement (38) zwischen dem
ersten und dem dritten Zahnrad (44) und das zweite Schaltelement (40)
zwischen dem zweiten Zahnrad (46) und dem dritten Zahnrad (48) angeordnet sind, wobei beide Eingangswellen (37, 39) der Schaltungseinheit (36) koaxial und versetzt zu der zweiten Eingangswelle (24) und somit auch zu der dritten Eingangswelle (30) angeordnet und über die zweite Kupplung (34) mit der zweiten Eingangswelle (24) der zweiten Elektromaschine (18) drehfest und somit mechanisch zu verbinden sind, wobei die erste Eingangswelle (16) der ersten Elektromaschine (10) parallel zu den beiden anderen Eingangswellen (24, 30) parallel versetzt angeordnet ist, wobei die erste Eingangswelle (16) über die Schaltungseinheit (36) wahlweise in einem ersten Gang oder in einem zweiten Gang mit der Ausgangswelle (50) verbindbar ist, wobei die zweite Eingangswelle (24) über die zweite Kupplung (34) wahlweise in einem der beiden Gänge der Schaltungseinheit (36) mit der Ausgangswelle (50) verbindbar ist, wobei die Ausgangswelle (50) mit mindestens einer der beiden Elektromaschinen (10, 18) zu verbinden ist, wobei die erste Eingangswelle (16) über das daran angeordnete Zahnrad (42) in dem ersten Gang über das erste Zahnrad (44) der Schaltungseinheit (36) mit dem ersten Zahnrad (52) der Ausgangswelle (50) zu verbinden ist, wobei die erste Eingangswelle (16) alternativ über das daran angeordnete Zahnrad (42) und über das zweite Zahnrad (46) der Schaltungseinheit (36) in dem zweiten Gang mit dem zweiten Zahnrad (54) der Ausgangswelle (50) zu verbinden ist, wobei die erste Eingangswelle (16) durch Einstellen der Schaltungseinheit (36) von der Ausgangswelle (50) auch vollständig zu entkoppeln ist, wobei das Zahnrad (42) an der ersten Eingangswelle (16) mit dem dritten Zahnrad (48) der Schaltungseinheit (36) zu verbinden ist, wobei die zweite Eingangswelle (24) über die als Doppelkupplung ausgebildete zweite Kupplung (34) wahlweise mit einer ersten Teilkupplung für den ersten Gang in dem ersten Gang oder mit einer zweiten Teilkupplung für den zweiten Gang in dem zweiten Gang mit der Ausgangswelle (50) verbindbar ist.

2. Getriebeanordnung nach Anspruch 1, bei der die zweite Eingangswelle (24) zwischen den beiden Kupplungen (32, 34) angeordnet ist, wobei die Verbrennungskraftmaschine (26) in demselben Gang wie die zweite Elektromaschine (18) mit der Ausgangswelle (50) zu verbinden ist.

3. Getriebeanordnung nach Anspruch 1 oder 2, bei der die zweite Kupplung (34) indirekt mit der Ausgangswelle (50) zu verbinden ist.

## Claims

1. Transmission arrangement for a motor vehicle which, for its motion, comprises a first electric machine (10) with a first input shaft (16) with a gearwheel (42) arranged thereon, a second electric machine (18) with a second input shaft (24), and an internal combustion engine (26) with a third input shaft (30), wherein the transmission arrangement (4) has two clutches (32, 34), wherein the transmission arrangement (4) has a switching unit (36) with only two gears and an output shaft (50), wherein the second input shaft (24) of the second electric machine (18) and the third input shaft (30) of the internal combustion engine (26) are arranged coaxially to one another, wherein the third input shaft (30) is to be connected via a first clutch (32) to the second input shaft (24), wherein the output shaft (50) is arranged parallel to the input shaft (16, 24, 30), wherein the second clutch (34) is to be connected via the switching unit (36) to the output shaft (50) and is designed as a dual clutch with two partial clutches,
**characterised in**
**that** the switching unit (36) comprises a first positive-locking switching element (38) and a second positive-locking switching element (40), a first input shaft (37) and a second input shaft (39) as well as furthermore a first gearwheel (44), a second gearwheel (46) and, between them, a third gearwheel (48), wherein the first switching element (38) is arranged between the first and the third gearwheel (44) and the second switching element (40) is arranged between the second gearwheel (46) and the third gearwheel (48), wherein both input shafts (37, 39) of the switching unit (36) are arranged so as to be coaxial and offset to the second input shaft (24) and thus also to the third input shaft (30) and to be connected via the second clutch (34) to the second input shaft (24) of the second electric machine (18) in a non-rotational and thus mechanical manner, wherein the first input shaft (16) of the first electric machine (10) is arranged parallel to the two other input shaft (24, 30) in a parallel offset manner, wherein the first input shaft (16) can be connected via the switching unit (36) optionally in a first gear or in a second gear to the output shaft (50), wherein the second input shaft (24) can be connected via the second clutch (34) optionally in one of the two gears of the switching unit (36) to the output shaft (50), wherein the output shaft (50) is to be connected with at least one of the two electric machines (10, 18), wherein the first input shaft (16) is to be connected via the gearwheel (42) arranged thereon in the first gear via the first gearwheel (44) of the switching unit (36) to the first gearwheel (52) of the output shaft (50), wherein the first input shaft (16) is to be connected alternatively via the gearwheel (42) arranged thereon and via the second gearwheel (46) of the switching unit (36) in the second gear to the second gearwheel (54) of the output shaft (50), wherein the first input shaft (16) is also to be completely decoupled from the output shaft (50) by adjusting the switching unit (36), wherein the gearwheel (42) on the first input shaft (16) is to be connected to the third gearwheel (48) of the switching unit (36), wherein the second input shaft (24) can be connected via the second clutch (34), designed as a double clutch, optionally with a first partial clutch for the first gear in the first gear or with a second partial clutch for the second gear in the second gear, to the output shaft (50).

2. Transmission arrangement according to claim 1, in which the second input shaft (24) is arranged between the two clutches (32, 34), wherein the internal combustion engine (26) is to be connected to the output shaft (50) in the same gear as the second electric machine (18).

3. Transmission arrangement according to claim 1 or 2, in which the second clutch (34) is to be connected indirectly to the output shaft (50).

## Revendications

1. Agencement de transmission pour un véhicule automobile qui, pour son déplacement, présente une première machine électrique (10) avec un premier arbre d'entrée (16) sur lequel est agencée une roue dentée (42), une seconde machine électrique (18) avec un deuxième arbre d'entrée (24) et un moteur à combustion interne (26) avec un troisième arbre d'entrée (30), dans lequel l'agencement de transmission (4) présente deux embrayages (32, 34), dans lequel l'agencement de transmission (4) présente une unité de circuit (36) avec seulement deux rapports et un arbre de sortie (50), dans lequel l'arbre de sortie (50) présente deux roues dentées (52, 54), dans lequel le deuxième arbre d'entrée (24) de la seconde machine électrique (18) et le troisième arbre d'entrée (30) du moteur à combustion interne (26) sont agencés coaxialement l'un par rapport à l'autre, dans lequel le troisième arbre d'entrée (30) peut être relié au deuxième arbre d'entrée (24) par l'intermédiaire d'un premier embrayage (32), dans lequel l'arbre de sortie (50) est agencé parallèlement aux arbres d'entrée (16, 24, 30), dans lequel le second embrayage (34) peut être relié à l'arbre de sortie (50) par l'intermédiaire de l'unité de circuit (36) et est réalisé sous la forme d'un double embrayage avec deux embrayages partiels, **caractérisé en ce que**
l'unité de circuit (36) présente un premier élément de circuit positif (38) et un second élément de circuit positif (40), un premier arbre d'entrée (37) et un deuxième arbre d'entrée (39) ainsi qu'une première roue dentée (44), une deuxième roue dentée (46) et une troisième roue dentée (48) entre celles-ci, dans lequel le premier élément de circuit (38) est agencé entre les première et troisième roues dentées (44) et le second élément de circuit (40) est agencé entre la deuxième roue dentée (46) et la troisième roue dentée (48), dans lequel les deux arbres d'entrée (37, 39) de l'unité de circuit (36) sont agencés coaxialement et décalés par rapport au deuxième arbre d'entrée (24) et également au troisième arbre d'entrée (30) et, via le second embrayage (34), sont donc à relier mécaniquement au deuxième arbre d'entrée (24) de la seconde machine électrique (18) de manière solidaire en rotation, dans lequel le premier arbre d'entrée (16) de la première machine électrique (10) est agencé décalé parallèlement aux deux autres arbres d'entrée (24, 30), dans lequel le premier arbre d'entrée (16) peut être relié à l'arbre de sortie (50) via l'unité de circuit (36) soit dans un premier rapport, soit dans un second rapport, dans lequel le deuxième arbre d'entrée (24) peut être relié à l'arbre de sortie (50) sélectivement dans l'un des deux rapports de l'unité de circuit (36) par l'intermédiaire du second embrayage (34), dans lequel l'arbre de sortie (50) doit être relié à au moins l'une des deux machines électriques (10, 18), dans lequel le premier arbre d'entrée (16), par l'intermédiaire de la roue dentée (42) qui est agencée au niveau de celui-ci, doit être relié dans le premier rapport par l'intermédiaire de la première roue dentée (44) de l'unité de circuit (36) à la première roue dentée (52) de l'arbre de sortie (50), dans lequel le premier arbre d'entrée (16), de manière alternée par l'intermédiaire de la roue dentée (42) qui est agencée au niveau de celui-ci, et par l'intermédiaire de la deuxième roue dentée (46) de l'unité de circuit (36) doit être relié dans le second rapport à la deuxième roue dentée (54) de l'arbre de sortie (50), dans lequel le premier arbre d'entrée (16), en ajustant l'unité de circuit (36) à partir de l'arbre de sortie (50), est également à désaccoupler complètement, dans lequel la roue dentée (42) au niveau du premier arbre d'entrée (16) doit être reliée à la troisième roue dentée (48) de l'unité de circuit (36), dans lequel le deuxième arbre d'entrée (24), par l'intermédiaire du second embrayage (34) réalisé sous la forme d'un double embrayage, peut être relié à l'arbre de sortie (50) soit avec un premier embrayage partiel pour le premier rapport dans le premier rapport, soit avec un second embrayage partiel pour le second rapport dans le second rapport.

2. Agencement de transmission selon la revendication 1, dans lequel le deuxième arbre d'entrée (24) est agencé entre les deux embrayages (32, 34), dans lequel le moteur à combustion interne (26) doit être relié à l'arbre de sortie (50) dans le même rapport que la seconde machine électrique (18).

3. Agencement de transmission selon la revendication 1 ou 2, dans lequel le second embrayage (34) doit être relié indirectement à l'arbre de sortie (50).
